(19) Europäisches Patentamt / European Patent Office / Office européen des brevets

(11) **EP 4 730 026 A1**

(12) **EUROPEAN PATENT APPLICATION**
published in accordance with Art. 153(4) EPC

(43) Date of publication:
**22.04.2026 Bulletin 2026/17**

(21) Application number: **23941691.0**

(22) Date of filing: **13.06.2023**

(51) International Patent Classification (IPC):
**G02F 1/163** (2006.01)  **G02F 1/1523** (2019.01)
**G02F 1/153** (2006.01)

(52) Cooperative Patent Classification (CPC):
**G02F 1/1523; G02F 1/153; G02F 1/163**

(86) International application number:
**PCT/KR2023/008134**

(87) International publication number:
**WO 2024/257907 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Industry-University Cooperation
Foundation
Hanyang University ERICA Campus
Ansan-si, Gyeonggi-do 15588 (KR)**

(72) Inventors:
• LEE, Sun Yong
  Ansan-si Gyeonggi-do 15588 (KR)
• KIM, Ji Seon
  Ansan-si Gyeonggi-do 15588 (KR)
• SON, Min Hee
  Ansan-si Gyeonggi-do 15588 (KR)
• SHIN, Dong Won
  Ansan-si Gyeonggi-do 15588 (KR)

(74) Representative: **Dr. Gassner & Partner mbB
Wetterkreuz 3
91058 Erlangen (DE)**

(54) **SMART MIRROR DEVICE USING SURFACE ROUGHNESS DIFFERENCE OF DRY LAMINATED THIN FILM, AND MANUFACTURING METHOD THEREFOR**

(57)    A smart mirror device is provided. The smart mirror device comprises: a first electrode and a second electrode disposed to be opposite to each other; an electrochromic layer which is disposed between the first electrode and the second electrode and which includes an antimony-doped tin oxide (ATO); and an electrolyte which is disposed between the second electrode and the electrochromic layer, and in which a first base electrolyte including silver (Ag), a second base electrolyte including bromine (Br) and a solvent are mixed, wherein voltage applied to the electrochromic layer is controlled such that the movement of silver ions (Ag$^+$) in the electrolyte is controlled, and thus any one of a transparent mode for transmitting incident light, a black mode for blocking incident light and a mirror mode for reflecting incident light can be selectively implemented.

[Fig. 1]

**Description**

[Technical Field]

The present invention relates to a smart mirror device using a difference in surface roughness of a dry laminated thin film and a method for manufacturing the same.

[Background Art]

Electrochromism is a phenomenon in which a color is reversibly changed by a direction of an electric field when a voltage is applied, and a material in which optical properties of a material may be reversibly changed by an electrochemical oxidation-reduction reaction having such properties is referred to as an electrochromic material. The electrochromic material has a property in which the electrochromic material is not colored when an electrical signal is not applied from the outside and colored when an electrical signal is applied thereto, or conversely, the electrochromic material is colored when a signal is not applied from the outside and color thereof disappears when a signal is applied thereto.

The electrochromic device is obtained by using a phenomenon in which the electrochromic material is reversibly changed in color due to an oxidation-reduction reaction by a voltage that is applied from the outside. Since the electrochromic device may secure visibility and actively adjust transmittance by a user, various color changes may be possible, and thus the electrochromic device has a wide application range such as a smart window, a vehicle room mirror, a laptop computer, a mobile phone, and a decorative design. Accordingly, various technologies related to the electrochromic device are being studied.

For example, Korean Unexamined Patent Publication No. 10-2017-0142473 (Application No. 10-2016-0075980, Applicant: Jeong Sun-seong) discloses a conductive structure, a conductive structure including the same, and an electrochromic device including the same, in which the conductive structure includes a substrate, a first metal oxide layer provided on the substrate, a first metal layer provided on the first metal oxide layer and including silver, a second metal oxide layer provided on the first metal layer, and a second metal layer provided on the second metal oxide layer, wherein a metal of the second metal layer has an oxidation level lower than that of silver. In addition, various technologies related to the electrochromic device are being continuously studied and developed.

[Disclosure]

[Technical Problem]

One technical problem to be solved by the present invention is to provide a smart mirror device in which surface roughness of an electrochromic layer is controlled according to a size of ATO powder used for manufacturing the electrochromic layer, and a method for manufacturing the same.

Another technical problem to be solved by the present invention is to provide a smart mirror device in which electrochemical properties and transmittance for incident light are controlled according to surface roughness of an electrochromic layer, and a method for manufacturing the same.

Still another technical problem to be solved by the present invention is to provide a smart mirror device in which a problem of internal cracks of an electrochromic layer is significantly reduced, and a method for manufacturing the same.

Still another technical problem to be solved by the present invention is to provide a smart mirror device in which a problem of environmental pollution is significantly reduced, and a method for manufacturing the same.

Still another technical problem to be solved by the present invention is to provide a smart mirror device that is easily applied to a large-area process and a method for manufacturing the same.

The technical problems to be solved by the present invention are not limited to those described above.

[Technical Solution]

To solve the above technical problems, the present invention provides a smart mirror device.

According to one embodiment, the smart mirror device may include: a first electrode and a second electrode disposed opposite to each other; an electrochromic layer disposed between the first electrode and the second electrode and including an antimony-doped tin oxide (ATO); and an electrolyte disposed between the second electrode and the electrochromic layer, in which a first base electrolyte including silver (Ag), a second base electrolyte including bromine (Br), and a solvent are mixed, in which a voltage applied to the electrochromic layer may be controlled so as to control movement of silver ions ($Ag^+$) in the electrolyte, so that any one of a transparent mode for transmitting incident light, a black mode for blocking the incident light, and a mirror mode for reflecting the incident light may be selectively implemented.

According to one embodiment, when a negative (-) voltage is applied to the electrochromic layer, the silver ions (Ag$^+$) in the electrolyte may be moved to the electrochromic layer, so that the black mode may be implemented.

According to one embodiment, when a positive (+) voltage is applied to the electrochromic layer, the silver ions (Ag$^+$) in the electrolyte may be moved to the second electrode, so that the mirror mode may be implemented.

According to one embodiment, when a voltage is applied to the electrochromic layer, the silver ions (Ag$^+$) in the electrolyte are may be moved, so that the transparent mode may be implemented.

According to one embodiment, electrochemical properties and transmittance for the incident light of the smart mirror device may be selectively controlled according to the surface roughness of the electrochromic layer.

According to one embodiment, when the surface roughness of the electrochromic layer has an Ra value of 85 nm or greater, the electrochemical properties of the smart mirror device may be improved.

According to one embodiment, when the surface roughness of the electrochromic layer has an Ra value of 20 nm or greater, the transmittance for the inclined light of the smart mirror device may be improved.

According to one embodiment, when any one of the black mode and the mirror mode is implemented, transmittance for incident light in a wavelength band of 300 nm to 1200 nm may be 0%.

According to one embodiment, the electrochromic layer may have a thickness of 400 nm to 500 nm.

To solve the above technical problems, the present invention provides a method for manufacturing a smart mirror device.

According to one embodiment, the method for manufacturing a smart mirror device may include: preparing a first electrode; forming an electrochromic layer including an antimony-doped thin oxide (ATO) on the first electrode; bonding the first electrode, on which the electrochromic layer is formed, with the second electrode such that the electrochromic layer is disposed therebetween; preparing an electrolyte in which a first base electrolyte including silver (Ag), a second base electrolyte including bromine (Br), and a solvent are mixed; and injecting the electrolyte between the second electrode and the electrochromic layer.

According to one embodiment, the electrochromic layer may be formed by a dry lamination method of spraying the antimony-doped tin oxide (ATO) onto the first electrode.

According to one embodiment, a spraying pressure of the antimony-doped tin oxide (ATO) onto the first electrode may be controlled according to a size of the antimony-doped tin oxide (ATO) .

According to one embodiment, when the antimony-doped tin oxide (ATO) has a micro ($\mu$m) size, the antimony-doped tin oxide (ATO) may be sprayed at a relatively high pressure onto the first electrode, and when the antimony-doped tin oxide (ATO) has a nano (nm) size, the antimony-doped tin oxide (ATO) may be sprayed at a relatively low pressure onto the first electrode.

According to one embodiment, when the antimony-doped tin oxide (ATO) has a nano (nm) size, the antimony-doped tin oxide (ATO) may be sprayed while heat-treating the first electrode.

[Advantageous Effects]

The smart mirror device according to the embodiment of the present invention may include: a first electrode and a second electrode disposed opposite to each other; an electrochromic layer disposed between the first electrode and the second electrode and including an antimony-doped tin oxide (ATO); and an electrolyte disposed between the second electrode and the electrochromic layer, in which a first base electrolyte including silver (Ag), a second base electrolyte including bromine (Br), and a solvent are mixed,

Accordingly, in the smart mirror device, the movement of silver ions (Ag$^+$) in the electrolyte is controlled according to the voltage applied to the electrochromic layer, so that any one of a transparent mode for transmitting incident light, a black mode for blocking the incident light, and a mirror mode for reflecting the incident light may be selectively implemented.

In addition, according to the smart mirror device, the electrochemical properties and transmittance for incident light may be selectively controlled according to the size of the antimony-doped tin oxide (ATO) used in the process of forming the electrochromic layer.

Specifically, when the antimony-doped tin oxide (ATO) used in the process of forming the electrochromic layer has a micro ($\mu$m) size, the surface roughness of the electrochromic layer may be relatively increased, so that a reaction surface area thereof may be increased, thereby improving electrochemical properties.

On the other hand, when the antimony-doped tin oxide (ATO) used in the process of forming the electrochromic layer has a nano (nm) size, the surface roughness of the electrochromic layer is relatively low, so that scattering of incident light is minimized, thereby improving the transmittance for the incident light.

In addition, in the process of manufacturing the electrochromic layer, since a dry lamination method (e.g., nanoparticle deposition system) is used, the problems of internal cracks of the electrochromic layer and environmental pollution may be significantly reduced, and the smart mirror device may be easily applied to a large-area process.

[Description of Drawings]

FIG. 1 is a flowchart for explaining a method for manufacturing a smart mirror device according to an embodiment of the present invention.

FIG. 2 is a schematic view for explaining the method for manufacturing a smart mirror device according to the embodiment of the present invention.

FIG. 3 is a view for explaining a transparent mode of the smart mirror device according to the embodiment of the present invention.

FIG. 4 is a view for explaining a discoloration process for implementing the smart mirror device in a black mode according to the embodiment of the present invention.

FIG. 5 is a view for explaining a decoloration process after the smart mirror device is implemented in the black mode according to the embodiment of the present invention.

FIG. 6 is a view for explaining a discoloration process for implementing the smart mirror device in a mirror mode according to the embodiment of the present invention.

FIG. 7 is a view for explaining a decoloration process after the smart mirror device is implemented in the mirror mode according to the embodiment of the present invention.

FIG. 8 is a photograph of a transparent mode, a black mode, and a mirror mode of a smart mirror device according to Experimental Example 1 of the present invention.

FIG. 9 is a photograph of a state where the smart mirror device according to Experimental Example 1 of the present invention is implemented in the black mode.

FIG. 10 is a photograph of ATO powder used in a manufacturing process of smart mirror devices according to Experimental Examples 1 and 2 of the present invention.

FIG. 11 is a photograph of an electrochromic layer of the smart mirror devices according to Experimental Examples 1 and 2 of the present invention.

FIG. 12 is a photograph of an electrochromic layer in a state where the smart mirror devices according to Experimental Examples 1 and 2 of the present invention are implemented in the black mode.

FIG. 13 is a view for explaining a thickness of the electrochromic layer of the smart mirror devices according to Experimental Examples 1 and 2 of the present invention.

FIG. 14 is a view for explaining surface roughness of the electrochromic layer of the smart mirror devices according to Experimental Examples 1 and 2 of the present invention.

FIG. 15 is a view for explaining changes in surface roughness of the electrochromic layer when the smart mirror device according to Experimental Examples 1 and 2 of the present invention are implemented in the black mode.

FIG. 16 is a view for explaining measurement results of transmittance when the smart mirror devices according to Experimental Examples 1 and 2 of the present invention are implemented in the transparent mode, the black mode, and the mirror mode.

FIG. 17 is a view for explaining measurement results of reflectance when the smart mirror devices according to Experimental Examples 1 and 2 of the present invention are implemented in the transparent mode, the black mode, and the mirror mode.

FIG. 18 is a view for explaining measurement results of transmittance and opacity of the electrochromic layer of the smart mirror devices according to Experimental Examples 1 and 2 of the present invention.

FIG. 19 is a view for explaining reaction mechanisms of the smart mirror devices according to Experimental Examples 1 and 2 of the present invention.

FIG. 20 is a view for explaining measurement results of electrochemical impedance of the smart mirror devices according to Experimental Examples 1 and 2 of the present invention.

FIGS. 21 and 22 are views for explaining cyclic voltage measurement results of the smart mirror devices according to Experimental Examples 1 and 2 of the present invention.

FIG. 23 is a view for explaining diffusion coefficients of the smart mirror devices according to Experimental Examples 1 and 2 of the present invention.

FIG. 24 is a view for explaining durability of the smart mirror devices according to Experimental Examples 1 and 2 of the present invention.

FIGS. 25 and 26 are views for explaining an effect of temperature in a process of forming an electrochromic layer of the smart mirror device according to Experimental Example 2 of the present invention.

[Best Mode]

Hereinafter, preferred embodiments of the present invention will be described in detail with reference to the accompanying drawings. However, the present invention may be embodied in different forms and should not be construed as limited to the embodiments set forth herein. Rather, the embodiments introduced herein are provided so that the disclosed contents may be thorough and complete and the spirit of the present invention may be sufficiently conveyed to those skilled in the art.

In the present specification, it will be understood that when an element is referred to as being "on" another element, it may be formed directly on the other element or intervening elements may be present. In the drawings, the thicknesses of layers and regions are exaggerated for clarity.

In addition, it will be also understood that although the terms first, second, third, etc. may be used herein to describe various elements, these elements should not be limited by these terms. These terms are only used to distinguish one element from another element. Thus, a first element in some embodiments may be termed a second element in other embodiments without departing from the teachings of the present invention. Embodiments explained and illustrated herein include their complementary counterparts. As used herein, the term "and/or" includes any and all combinations of one or more of the associated listed elements.

The singular expression also includes the plural meaning as long as it does not differently mean in the context. In addition, the terms "comprise", "have" etc., of the description are used to indicate that there are features, numbers, steps, elements, or combinations thereof, and they should not exclude the possibilities of combination or addition of one or more features, numbers, operations, elements, or a combination thereof. Furthermore, it will be understood that when an element is referred to as being "connected" or "coupled" to another element, it may be directly connected or coupled to the other element or intervening elements may be present.

In addition, when detailed descriptions of related known functions or constitutions are considered to unnecessarily cloud the gist of the present invention in describing the present invention below, the detailed descriptions will not be included.

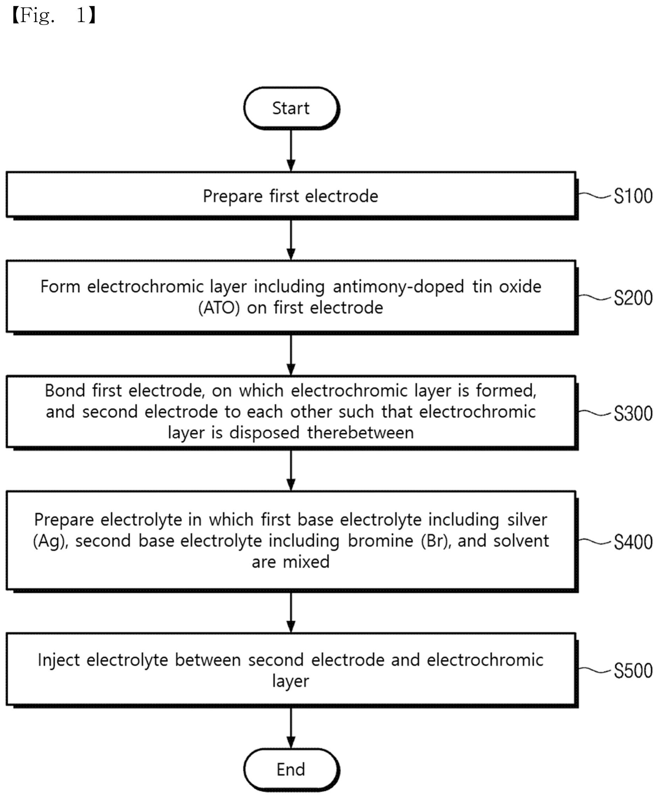

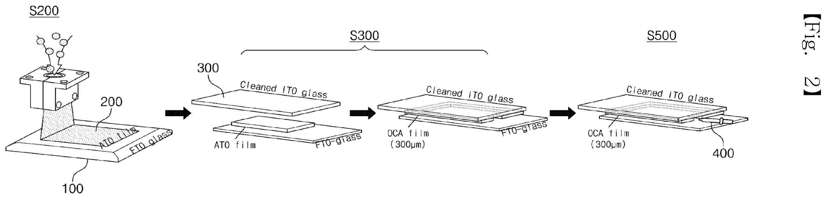

FIG. 1 is a flowchart for explaining a method for manufacturing a smart mirror device according to an embodiment of the present invention, and FIG. 2 is a schematic view for explaining the method for manufacturing a smart mirror device according to the embodiment of the present invention.

Referring to FIGS. 1 and 2, a first electrode 100 may be prepared (S100). According to one embodiment, a first electrode 100 may include fluorine tin-doped oxide (FTO) glass.

An electrochromic layer 200 may be formed on the first electrode 100 (S200). According to one embodiment, the electrochromic layer 200 may include an antimony-doped tin oxide (ATO) .

According to one embodiment, the electrochromic layer 200 may be formed using a dry lamination method. For example, antimony-doped tin oxide (ATO) powder may be provided on the first electrode 100 by a nanoparticle deposition system (NPDS). On the other hand, when the electrochromic layer 200 is formed by a wet lamination method, internal cracks may be generated due to vaporization of a solvent in the electrochromic layer, thereby causing a problem in that the performance of the smart mirror device is deteriorated. In addition, in the case of the wet lamination method, a problem of environmental pollution may occur. However, as described above, when the electrochromic layer 200 is formed by the dry lamination method, the problem of internal cracks and environmental pollution may be significantly reduced.

In addition, as described above, as the electrochromic layer 200 is formed by the dry lamination method, a plurality of antimony-doped tin oxide (ATO) particles may be observed in the electrochromic layer 200.

According to one embodiment, surface roughness of the electrochromic layer 200 may be controlled according to a size of the antimony-doped tin oxide (ATO) sprayed onto the first electrode 100. For example, when the antimony-doped tin oxide (ATO) sprayed onto the first electrode 100 has a micro ($\mu$m) size, the electrochromic layer 200 may have relatively high surface roughness. Specifically, when the antimony-doped tin oxide (ATO) sprayed onto the first electrode 100 has a micro ($\mu$m) size, the electrochromic layer 200 may have an Ra value of 85 nm or greater. On the other hand, when the antimony-doped tin oxide (ATO) sprayed onto the first electrode 100 has a nano (nm) size, the electrochromic layer 200 may have relatively low surface roughness. Specifically, when the antimony-doped tin oxide (ATO) sprayed onto the first electrode 100 has a nano (nm) size, the electrochromic layer 200 may have an Ra value of 20 nm or less.

In addition, a spraying pressure of the antimony-doped tin oxide (ATO) onto the first electrode 100 may be controlled according to a size of the antimony-doped tin oxide (ATO) sprayed onto the first electrode 100. For example, when the antimony-doped tin oxide (ATO) has a micro ($\mu$m) size, the antimony-doped tin oxide (ATO) may be sprayed at a relatively high pressure onto the first electrode 100. On the other hand, when the antimony-doped tin oxide (ATO) has a nano (nm) size, the antimony-doped tin oxide (ATO) may be sprayed at a relatively low pressure onto the first electrode 100. In addition, when the antimony-doped tin oxide (ATO) has a nano (nm) size, the antimony-doped tin oxide (ATO) may be sprayed while heat-treating the first electrode 100.

That is, when the size of the antimony-doped tin oxide (ATO) is relatively large (e.g., $\mu$m size), the electrochromic layer 200 may be formed by spraying at a relatively high pressure, whereas when the size of the antimony-doped tin oxide (ATO) is relatively small (e.g., nm size), the electrochromic layer 200 may be formed while heat-treating the first electrode 100 and spraying at a relatively low pressure. Accordingly, reliability of the electrochromic layer 200 may be improved.

On the other hand, when the first electrode 100 is not heat-treated or is the antimony-doped tin oxide (ATO) is sprayed at a relatively high pressure even though the size of the antimony-doped tin oxide (ATO) is relatively small (e.g., nm size), the antimony-doped tin oxide (ATO) may not be deposited on the first electrode 100, resulting in deterioration of the reliability of the electrochromic layer 200.

According to one embodiment, the electrochemical properties and transmittance for incident light of the smart mirror device may be selectively controlled according to the size of antimony-doped tin oxide (ATO) used to form the electrochromic layer 200.

For example, when the antimony-doped tin oxide (ATO) used to form the electrochromic layer 200 has a micro ($\mu$m) size, the smart mirror device may have improved electrochemical properties. Specifically, when the antimony-doped tin oxide (ATO) used to form the electrochromic layer 200 has a micro ($\mu$m) size, the surface roughness of the electrochromic layer 200 may be formed to be relatively high, so that a reaction surface area of the electrochromic layer 200 may be increased, thereby improving electrochemical properties.

On the other hand, when the antimony-doped tin oxide (ATO) used to form the electrochromic layer 200 has a nano (nm) size, the smart mirror device may have improved transmittance for the incident light. On the other hand, when the antimony-doped tin oxide (ATO) used to form the electrochromic layer 200 has a nano (nm) size, the surface roughness of the electrochromic layer 200 may be relatively low, so that scattering of light incident on the electrochromic layer 200 may be minimized, thereby improving the transmittance for the incident light.

According to one embodiment, when the electrochromic layer 200 is formed to have a large area, the size of the antimony-doped tin oxide (ATO) used to form an outer region of the electrochromic layer 200 may be different from the size of the antimony-doped tin oxide (ATO) used to form a central region. Specifically, the antimony-doped tin oxide (ATO) used to form the outer region of the electrochromic layer 200 may have a micro ($\mu$m) size, whereas the antimony-doped tin oxide (ATO) used to form the central region may have a nano (nm) size.

That is, the surface roughness of the outer region to which wiring is connected may be increased to improve the electrochemical properties, whereas the surface roughness of the central region may be reduced to improve the transmittance for incident light. Accordingly, even though the electrochromic layer 200 is manufactured in a large area, rapid discoloration and decoloration may be achieved due to high electrochemical properties, and aesthetics may be secured due to high transmittance for incident light.

According to one embodiment, the electrochromic layer 200 may be formed to have a thickness of 400 nm to 500 nm. To this end, conditions of the nanoparticle deposition system (NPDS) that provides antimony-doped tin oxide (ATO) powder onto the first electrode 100 may be controlled.

For example, the electrochromic layer 200 may be formed at a temperature of 150°C or higher. On the other hand, when the electrochromic layer 200 is formed at a temperature of lower than 150°C, the antimony-doped tin oxide (ATO) is not deposited, so that there may be a problem that the electrochromic layer 200 is not formed or the thickness thereof is excessively thin.

In addition, the electrochromic layer 200 may be formed through laminations of more than one and less than four times. On the other hand, when the electrochromic layer 200 is formed through one or four or more times of laminations, there may be a problem that the thickness thereof is excessively thin.

In addition, the electrochromic layer 200 may be formed at a nozzle scan rate of greater than 200 $\mu$m/s and less than 1500 $\mu$m/s. On the other hand, when the electrochromic layer 200 is formed at a nozzle scan rate of 200 $\mu$m/s or less, the thickness thereof is excessively thick, and when the electrochromic layer 200 is formed at a nozzle scan rate of 1500 $\mu$m/s or greater, the thickness thereof is excessively thin.

The first electrode 100, on which the electrochromic layer 200 is formed, and a second electrode 300 may be bonded to each other (S300). Specifically, the first electrode 100 and the second electrode 300 may be bonded to each other such that the electrochromic layer 200 is disposed between the first electrode 100 and the second electrode 300. According to one embodiment, the second electrode 300 may include a material different from that of the first electrode 100. For example, the second electrode 300 may include indium tin-doped oxide (ITO) glass.

An electrolyte 400 in which a first base electrolyte including silver (Ag), a second base electrolyte including bromine (Br), and a solvent are mixed may be prepared (S400). For example, the first base electrolyte may include silver nitrate ($AgNO_3$). For example, the second base electrolyte may include tetra-n-butylammonium bromide (TBABr). For example, the solvent may include dimethyl sulfoxide (DMSO).

The electrolyte 400 may be injected between the second electrode 300 and the electrochromic layer 200 (S500). Accordingly, the smart mirror device according to the embodiment may be manufactured.

In the smart mirror device, the movement of silver (Ag) ions in the electrolyte 400 may be controlled according to a voltage applied to the electrochromic layer 200. Thus, the smart mirror device may be selectively implemented in any one of a transparent mode for transmitting incident light, a black mode for blocking incident light, and a mirror mode for reflecting incident light. Hereinafter, the transparent mode, the black mode, and the mirror mode will be described in more detail.

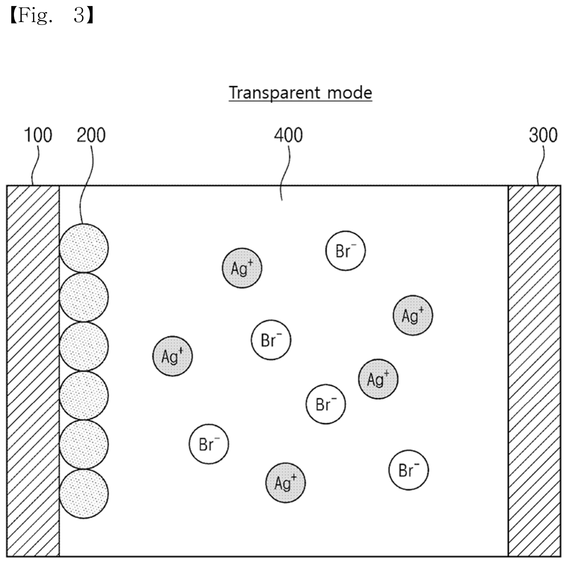

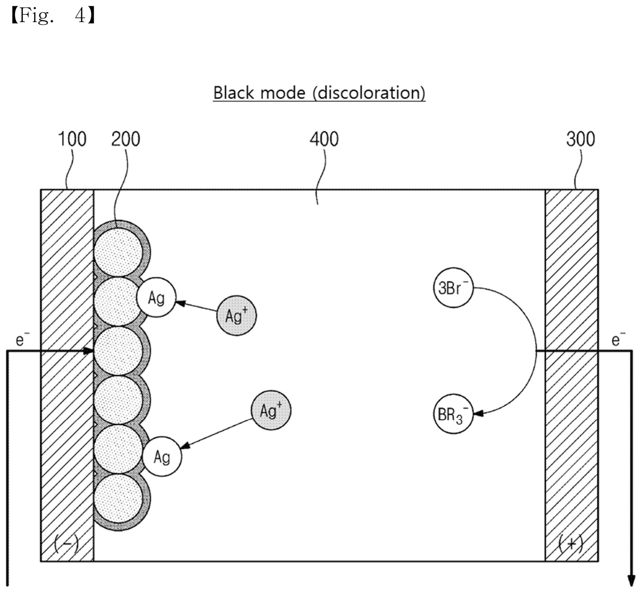

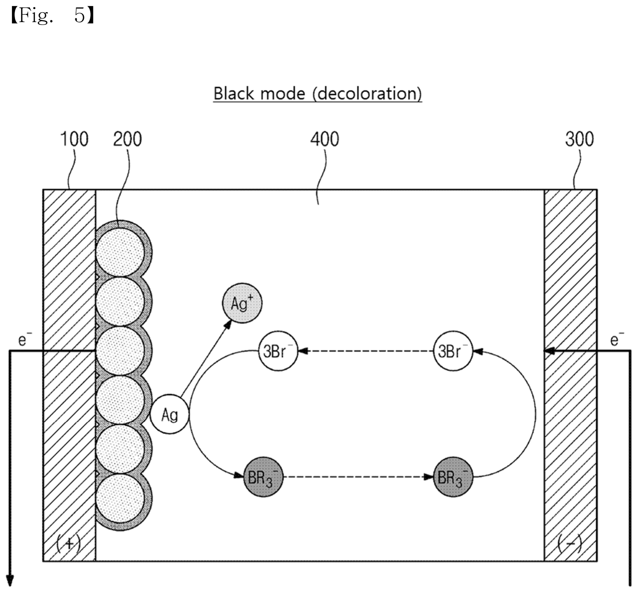

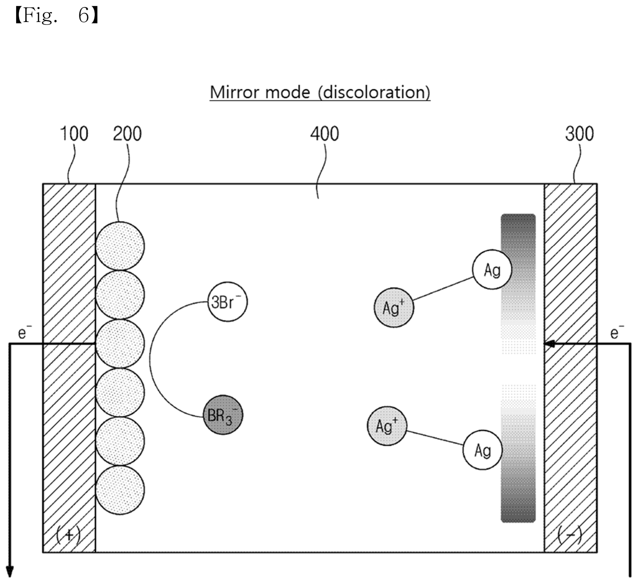

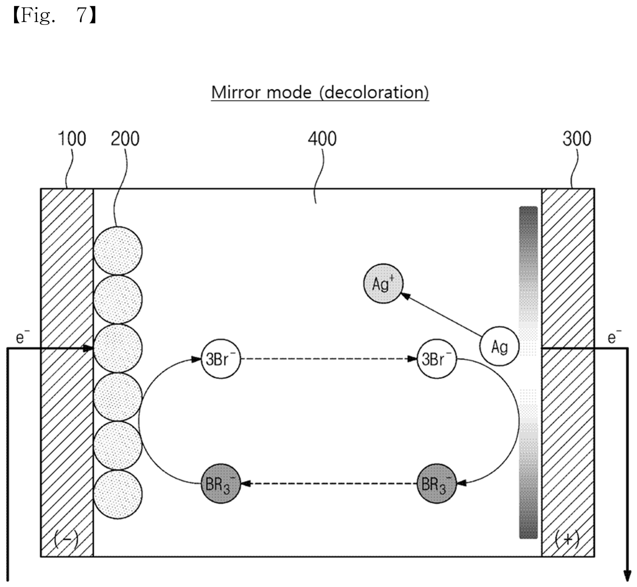

FIG. 3 is a view for explaining a transparent mode of the smart mirror device according to the embodiment of the present invention, FIG. 4 is a view for explaining a discoloration process for implementing the smart mirror device in a black mode according to the embodiment of the present invention, FIG. 5 is a view for explaining a decoloration process after the smart mirror device is implemented in the black mode according to the embodiment of the present invention, FIG. 6 is a view for explaining a discoloration process for implementing the smart mirror device in a mirror mode according to the embodiment of the present invention, and FIG. 7 is a view for explaining a decoloration process after the smart mirror device is implemented in the mirror mode according to the embodiment of the present invention.

Transparent Mode

Referring to FIG. 3, when a voltage is not applied to the electrochromic layer 200, silver ions ($Ag^+$) in the electrolyte 400 may not be moved. Accordingly, the smart mirror device may be implemented in the transparent mode for transmitting incident light.

Black Mode

Referring to FIG. 4, when a negative (-) voltage is applied to the electrochromic layer 200, silver ions ($Ag^+$) in the electrolyte 400 may be moved to the electrochromic layer 200. The silver ions ($Ag^+$) moved to the electrochromic layer 200 may be deposited on the electrochromic layer 200. In addition, bromine ions ($Br^-$) in the electrolyte 400 may be oxidized. Accordingly, the smart mirror device may be discolored to be implemented in the black mode for blocking incident light.

Referring to FIG. 5, when a positive (+) voltage is applied to the electrochromic layer 200 of the smart mirror device implemented in the black mode, the smart mirror device may be decolored. Specifically, when a positive (+) voltage is applied to the electrochromic layer 200 of the smart mirror device implemented in the black mode, silver ions ($Ag^+$) deposited in the electrochromic layer 200 are dissolved in the electrolyte 400, and bromine ions ($Br^-$) in the electrolyte 400 are reduced, so that the smart mirror device may be decolored.

Mirror Mode

Referring to FIG. 6, when a positive (+) voltage is applied to the electrochromic layer 200, silver ions ($Ag^+$) in the electrolyte 400 may be moved to the second electrode 300. The silver ions ($Ag^+$) moved to the second electrode 300 may be deposited on the second electrode 300. In addition, bromine ions ($Br^-$) in the electrolyte 400 may be oxidized. Accordingly, the smart mirror device may be discolored to be implemented in the mirror mode for reflecting incident light.

Referring to FIG. 7, when a negative (-) voltage is applied to the electrochromic layer 200 of the smart mirror device implemented in the mirror mode, the smart mirror device may be decolored. Specifically, when a negative (-) voltage is applied to the electrochromic layer 200 of the smart mirror device implemented in the mirror mode, silver ions ($Ag^+$) deposited in the second electrode 300 are dissolved in the electrolyte 400, and bromine ions ($Br^-$) in the electrolyte 400 are reduced, so that the smart mirror device may be decolored.

As a result, the smart mirror device according to the embodiment of the present invention may include: a first electrode and a second electrode disposed opposite to each other; an electrochromic layer disposed between the first electrode and the second electrode and including an antimony-doped tin oxide (ATO); and an electrolyte disposed between the second electrode and the electrochromic layer, in which a first base electrolyte including silver (Ag), a second base electrolyte including bromine (Br), and a solvent are mixed,

Accordingly, in the smart mirror device, the movement of silver ions ($Ag^+$) in the electrolyte is controlled according to the voltage applied to the electrochromic layer, so that any one of a transparent mode for transmitting incident light, a black mode for blocking the incident light, and a mirror mode for reflecting the incident light may be selectively implemented.

In addition, according to the smart mirror device, the electrochemical properties and transmittance for incident light may be selectively controlled according to the size of the antimony-doped tin oxide (ATO) used in the process of forming the electrochromic layer.

Specifically, when the antimony-doped tin oxide (ATO) used in the process of forming the electrochromic layer has a micro ($\mu$m) size, the surface roughness of the electrochromic layer may be relatively increased, so that a reaction surface area thereof may be increased, thereby improving electrochemical properties.

On the other hand, when the antimony-doped tin oxide (ATO) used in the process of forming the electrochromic layer has a nano (nm) size, the surface roughness of the electrochromic layer is relatively low, so that scattering of incident light is minimized, thereby improving the transmittance for the incident light.

In addition, in the process of manufacturing the electrochromic layer, since a dry lamination method (e.g., nanoparticle deposition system) is used, the problems of internal cracks of the electrochromic layer and environmental pollution may be significantly reduced, and the smart mirror device may be easily applied to a large-area process.

Hereinabove, the smart mirror device and the method for manufacturing the same according to the embodiment of the present invention have been described. Hereinafter, specific experimental examples and property evaluation results of the smart mirror device and the method for manufacturing the same according to the embodiment of the present invention will be described.

Manufacture of Smart Mirror Device according to Experimental Examples

An electrochromic layer was formed by performing dry lamination using antimony-doped tin oxide (ATO) powder on a first electrode by a nanoparticle deposition system (NPDS), and the first electrode and a second electrode were bonded to each other such that the electrochromic layer was disposed therebetween. Thereafter, an electrolyte was injected between the electrochromic layer and the second electrode to manufacture smart mirror devices according to the experimental examples.

More specifically, fluorine tin-doped oxide (FTO) glass was used as the first electrode, and indium tin-doped oxide (ITO) glass was used as the second electrode. In addition, a mixture of $AgNO_3$ at a concentration of 50 mM, tetra-n-butylammonium bromide (TBABr) at a concentration of 250 mM, and dimethyl sulfoxide (DMSO) was used as the electrolyte. In addition, specific conditions of the NPDS system for forming the electrochromic layer are summarized in <Table 1> below.

[Table 1]

| | |
|---|---|
| Material | Micro ATO: 40-50 $\mu$m (Nanoshell, USA) <br> Nano ATO: 30 nm (Nanoshell, USA) |
| Distance between nozzle/substrate (SoD), Bed flow | 3 mm, 27.5 L/min |
| Nozzle scan rate | Micro ATO: 100 $\mu$m/sec x two times Nano ATO: 150°C, 1500 $\mu$m/sec x two times |
| Compressor pressure | 0.3 MPa |
| Chamber internal pressure | 0.01 MPa (Gauge pressure) |

The smart mirror device in which an ATO having a micro size ($\mu$m) is used to form the electrochromic layer is defined as Experimental Example 1, and the smart mirror device in which an ATO having a nano size (nm) is used is defined as Experimental Example 2.

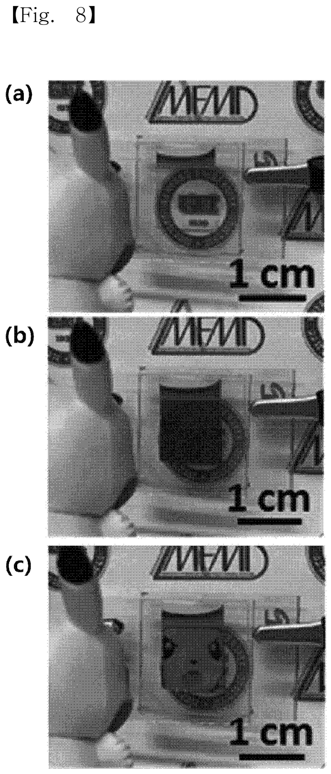

FIG. 8 is a photograph of a transparent mode, a black mode, and a mirror mode of a smart mirror device according to Experimental Example 1 of the present invention.

FIG. 8(a) is a photograph showing a state where the smart mirror device according to Experimental Example 1 is implemented in the transparent mode, FIG. 8(b) is a photograph showing a state where the smart mirror device according to Experimental Example 1 is implemented in the black mode, and FIG. 8(c) is a photograph showing a state where the smart mirror device according to Experimental Example 1 is implemented in the mirror mode.

The transparent mode was implemented by applying no voltage to the electrochromic layer, the black mode was implemented by applying a negative voltage to the electrochromic layer, and the mirror mode was implemented by applying a positive voltage to the electrochromic layer.

As can be seen in FIGS. 8(a) to 8(c), it was confirmed that the rear of the smart mirror device was visible in the transparent mode, it was confirmed that the rear of the smart mirror device was not visible in the black mode, and it was confirmed that an object was reflected through the smart mirror device in the mirror mode.

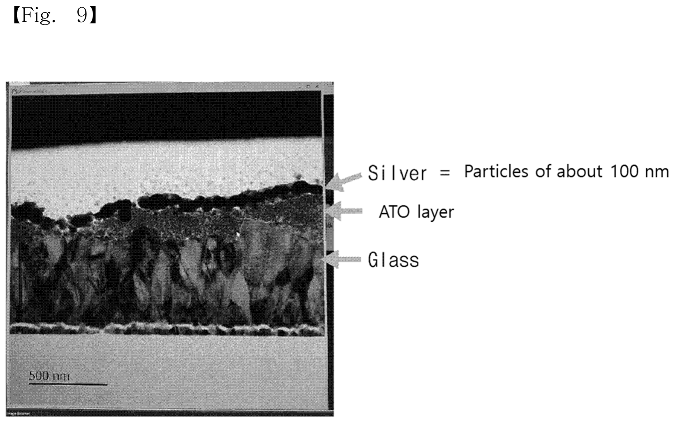

FIG. 9 is a photograph of a state where the smart mirror device according to Experimental Example 1 of the present invention is implemented in the black mode.

FIG. 9 shows a transmission electron microscope (TEM) photograph of the periphery of the electrochromic layer (ATO layer) of the smart mirror device according to Experimental Example 1 implemented in the black mode.

As can be seen in FIG. 9, in the smart mirror device according to Experimental Example 1 implemented in the black mode, it was confirmed that silver ions ($Ag^+$) were reduced in the electrochromic layer (ATO layer) and a silver nanoparticle layer was deposited.

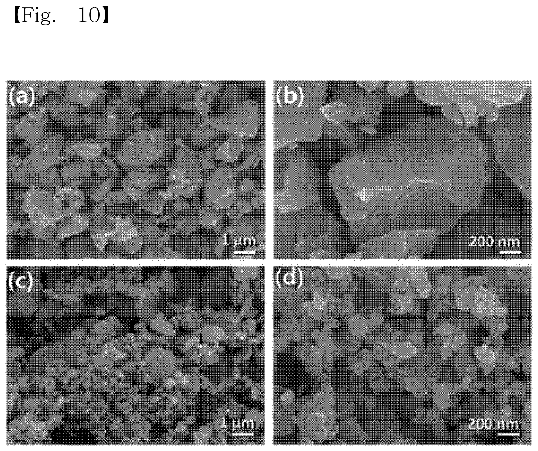

FIG. 10 is a photograph of ATO powder used in a manufacturing process of smart mirror devices according to Experimental Examples 1 and 2 of the present invention.

FIGS. 10(a) and 10(b) show scanning electron microscope (SEM) photographs of the ATO powder used in the manufacturing process of the smart mirror device according to Experimental Example 1, and FIGS. 10(c) and 10(d) show scanning electron microscope (SEM) photographs of the ATO powder used in the manufacturing process of the smart mirror device according to Experimental Example 2.

As can be seen in FIGS. 10(a) and 10(b), it was confirmed that the ATO having a micro ($\mu$m) size was used in the manufacturing process of the smart mirror device according to Experimental Example 1, and the ATO having a nano (nm) size was used in the manufacturing process of the smart mirror device according to Experimental Example 2.

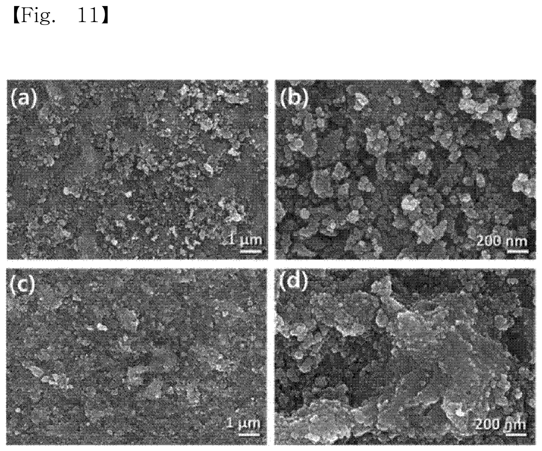

FIG. 11 is a photograph of an electrochromic layer of the smart mirror devices according to Experimental Examples 1 and 2 of the present invention.

FIGS. 11(a) and 11(b) show SEM photographs of the electrochromic layer of the smart mirror device according to Experimental Example 1, and FIGS. 11(c) and 11(d) show SEM photographs of the electrochromic layer of the smart mirror device according to Experimental Example 2.

As can be seen in FIGS. 11(a) and 11(b), it was confirmed that the electrochromic layer had a relatively rough surface when the ATO having a micro ($\mu$m) size was used, whereas as can be seen in FIGS. 11(c) and 11(d), it was confirmed that the electrochromic layer had a relatively smooth surface when the ATO having a nano (nm) size was used.

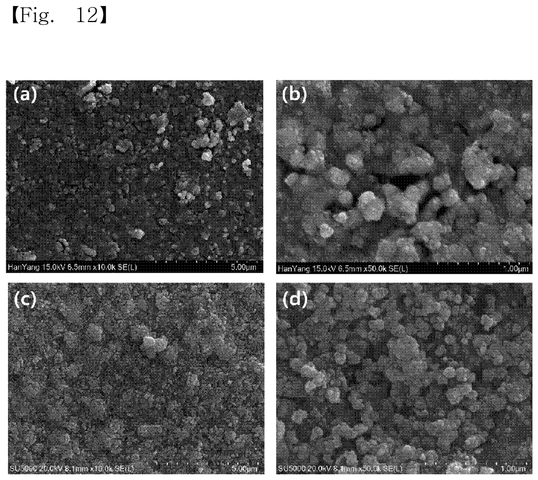

FIG. 12 is a photograph of an electrochromic layer in a state where the smart mirror devices according to Experimental Examples 1 and 2 of the present invention are implemented in the black mode.

FIGS. 12(a) and 12(b) show SEM photographs of the electrochromic layer in a state where the smart mirror device according to Experimental Example 1 is implemented in the black mode, and FIGS. 12(c) and 12(d) show SEM photographs of the electrochromic layer in a state where the smart mirror device according to Experimental Example 2 is implemented in the black mode.

As can be seen in FIGS. 12(a) and 12(b), it was confirmed that the electrochromic layer had a relatively rough surface when the ATO having a micro ($\mu$m) size was used, whereas as can be seen in FIGS. 12(c) and 12(d), it was confirmed that the electrochromic layer had a relatively smooth surface when the ATO having a nano (nm) size was used.

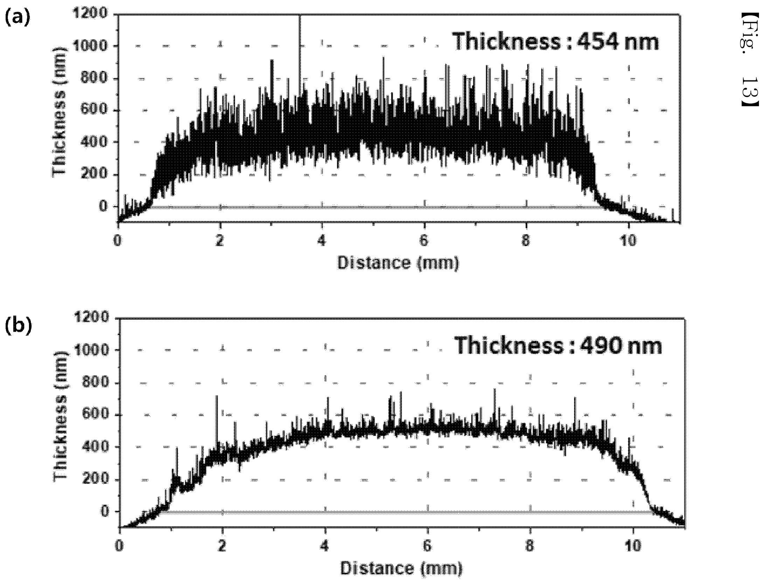

FIG. 13 is a view for explaining a thickness of the electrochromic layer of the smart mirror devices according to Experimental Examples 1 and 2 of the present invention.

FIG. 13(a) shows measurement of a thickness of the electrochromic layer of the smart mirror device according to Experimental Example 1, and FIG. 13(b) shows measurement of a thickness of the electrochromic layer of the smart mirror device according to Experimental Example 2.

As can be seen in FIG. 13(a), it was confirmed that the electrochromic layer was formed with a thickness of 454 nm when the ATO having a micro ($\mu$m) size was used, and as can be seen in FIG. 13(b), it was confirmed that the electrochromic layer was formed with a thickness of 490 nm when the ATO having a nano (nm) size was used.

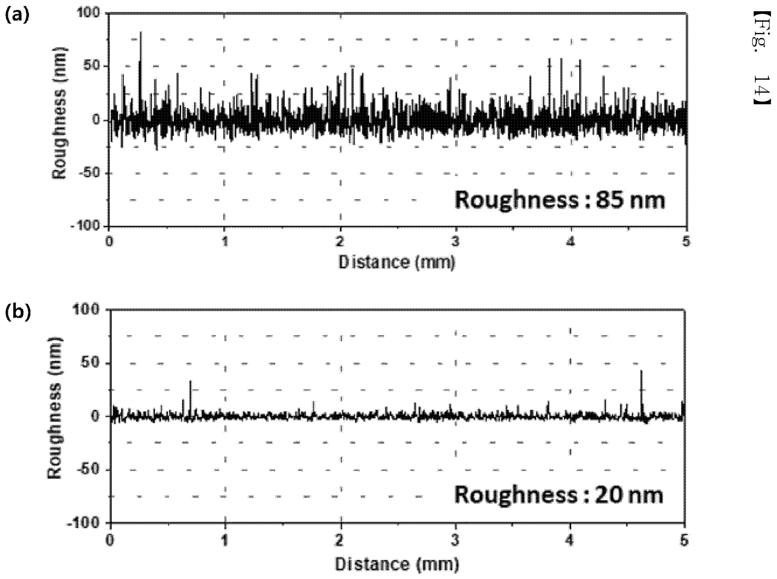

FIG. 14 is a view for explaining surface roughness of the electrochromic layer of the smart mirror devices according to Experimental Examples 1 and 2 of the present invention.

FIG. 14(a) shows measurement of an Ra value of surface roughness of the electrochromic layer of the smart mirror device according to Experimental Example 1, and FIG. 14(b) shows measurement of an Ra value of surface roughness of the electrochromic layer of the smart mirror device according to Experimental Example 2.

As can be seen in FIG. 14(a), it was confirmed that the electrochromic layer had an Ra value of 85 nm when the ATO having a micro ($\mu$m) size was used, whereas as can be seen in FIG. 14(b), it was confirmed that the electrochromic layer had an Ra value of 20 nm when the ATO having a nano (nm) size as used.

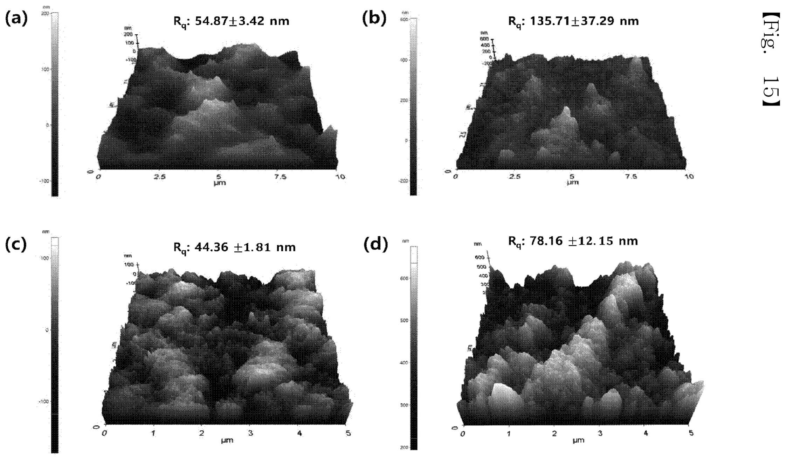

FIG. 15 is a view for explaining changes in surface roughness of the electrochromic layer when the smart mirror devices according to Experimental Examples 1 and 2 of the present invention are implemented in the black mode.

FIG. 15(a) shows measurement of an Rq value of surface roughness of the electrochromic layer when the smart mirror device according to Experimental Example 1 is implemented in the transparent mode, and FIG. 15(b) shows measurement of an Rq value of surface roughness of the electrochromic layer when the smart mirror device according to Experimental Example 1 is implemented in the black mode.

As can be seen in FIGS. 15(a) and 15(b), when the ATO having a micro ($\mu$m) size was used, it was confirmed that the Rq value was 54.87 ± 3.42 nm in the transparent mode, whereas the Rq value was 135.71 ± 37.29 nm in the black mode.

FIG. 15(c) shows measurement of an Rq value of surface roughness of the electrochromic layer when the smart mirror device according to Experimental Example 2 is implemented in the transparent mode, and FIG. 15(d) shows measurement of an Rq value of surface roughness of the electrochromic layer when the smart mirror device according to Experimental Example 2 is implemented in the black mode.

As can be seen in FIGS. 15(c) and 15(d), when the ATO having a nano (nm) size was used, it was confirmed that the Rq value was 44.36 ± 1.81 nm in the transparent mode, whereas the Rq value was 78.16 ± 12.15 nm in the black mode.

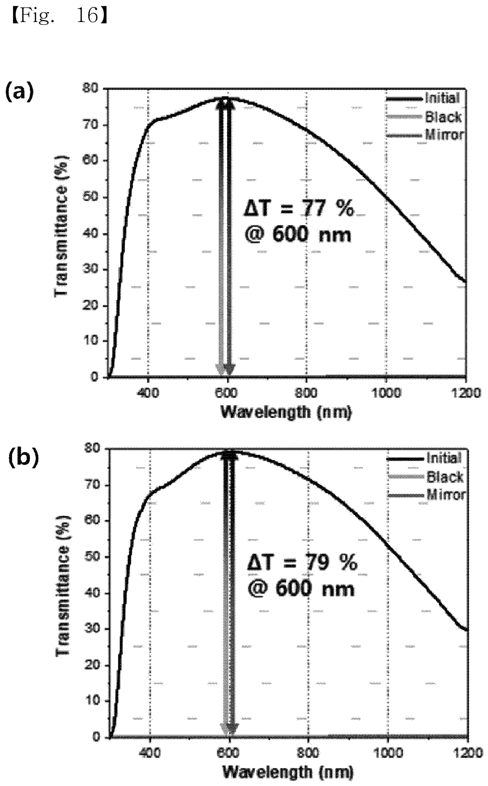

FIG. 16 is a view for explaining measurement results of transmittance when the smart mirror devices according to Experimental Examples 1 and 2 of the present invention are implemented in the transparent mode, the black mode, and the mirror mode.

FIG. 16(a) shows measurement of transmittance in each mode after the smart mirror device according to Experimental Example 1 is implemented in the transparent mode (Initial), the black mode (Black), and the mirror mode (Mirror), and FIG. 16(b) shows measurement of transmittance in each mode after the smart mirror device according to Experimental Example 2 is implemented in the transparent mode (Initial), the black mode (Black), and the mirror mode (Mirror).

As can be seen in FIGS. 16(a) and 16(b), it was confirmed that the transmittance for incident light of the smart mirror devices according to Experimental Examples 1 and 2 in a wavelength band of 300 nm to 1200 nm was 0% in the black mode and the mirror mode.

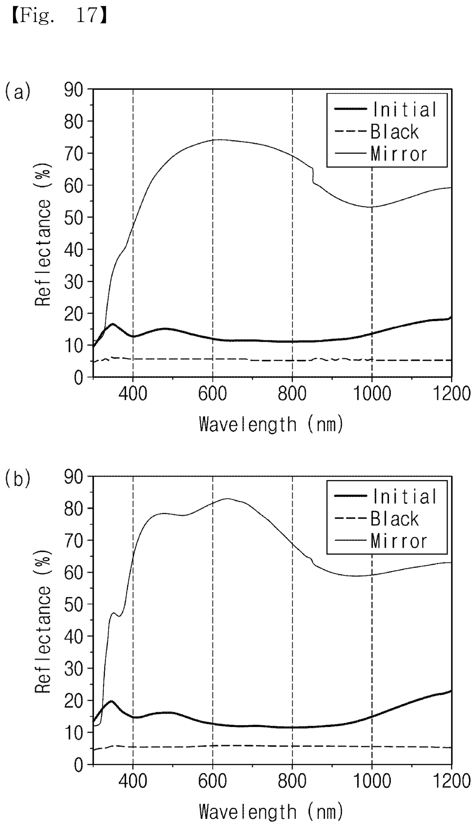

FIG. 17 is a view for explaining measurement results of reflectance when the smart mirror devices according to Experimental Examples 1 and 2 of the present invention are implemented in the transparent mode, the black mode, and the mirror mode.

FIG. 17(a) shows measurement of reflectance in each mode after the smart mirror device according to Experimental Example 1 is implemented in the transparent mode (Initial), the black mode (Black), and the mirror mode (Mirror), and FIG. 17(b) shows measurement of reflectance in each mode after the smart mirror device according to Experimental Example 2 is implemented in the transparent mode (Initial), the black mode (Black), and the mirror mode (Mirror).

As can be seen in FIGS. 17(a) and 17(b), it was confirmed that both the smart mirror devices according to Experimental Examples 1 and 2 had reflectivity of 75% or greater in the mirror mode.

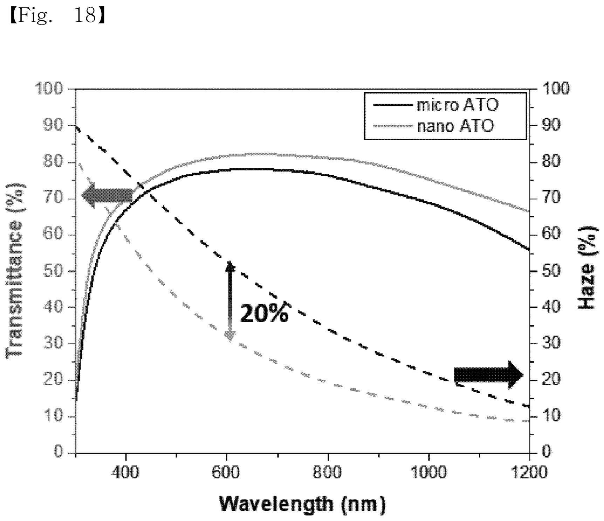

FIG. 18 is a view for explaining measurement results of transmittance and opacity of the electrochromic layer of the smart mirror devices according to Experimental Examples 1 and 2 of the present invention.

FIG. 18 shows measurement of transmittance (%) and opacity (Haze, %) of the electrochromic layer of the smart mirror devices according to Experimental Example 1 (micro ATO) and Experimental Example 2 (nano ATO).

As can be seen in FIG. 18, in the case of transmittance, it was confirmed that the electrochromic layer of the smart mirror device according to Experimental Example 1 exhibited 77% and the electrochromic layer of the smart mirror device according to Experimental Example 2 exhibited 81% at 600 nm, which is a visible light wavelength band. In addition, in the case of opacity, it was confirmed that the electrochromic layer of the smart mirror device according to Experimental Example 1 exhibited 52% and the electrochromic layer of the smart mirror device according to Experimental Example 2 exhibited 32% at 600 nm, which is a visible light wavelength band, so that a difference therebetween was about 20%.

That is, it was confirmed that the smart mirror device had relatively low transmittance and relatively high opacity when the ATO having a micro ($\mu$m) size was used, whereas the smart mirror device had relatively high transmittance and relatively low opacity when the ATO having a nano (nm) size was used.

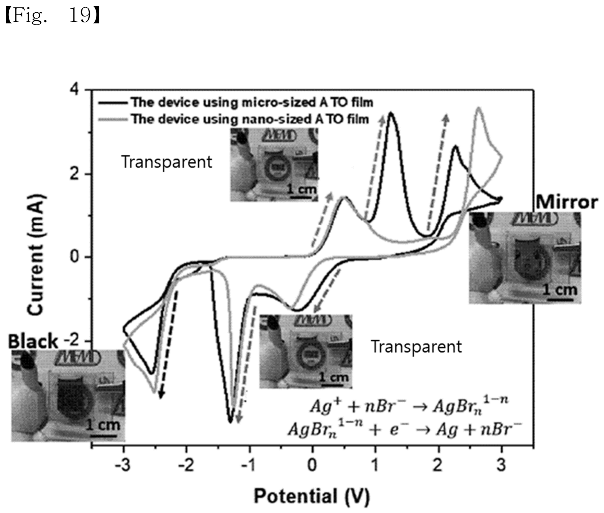

FIG. 19 is a view for explaining reaction mechanisms of the smart mirror devices according to Experimental Examples 1 and 2 of the present invention.

FIG. 19 shows a cyclic voltammetry (CV) analysis result of each of the smart mirror devices according to Experimental Example 1 (micro-sized ATO) and Experimental Example 2 (nano-sized ATO).

As can be seen in FIG. 19, it was confirmed that the black mode was implemented when silver ions ($Ag^+$) reacted in the relatively rough electrochromic layer (ATO layer), and the mirror mode was implemented when silver ions ($Ag^+$) reacted in the relatively flat second electrode (ITO electrode).

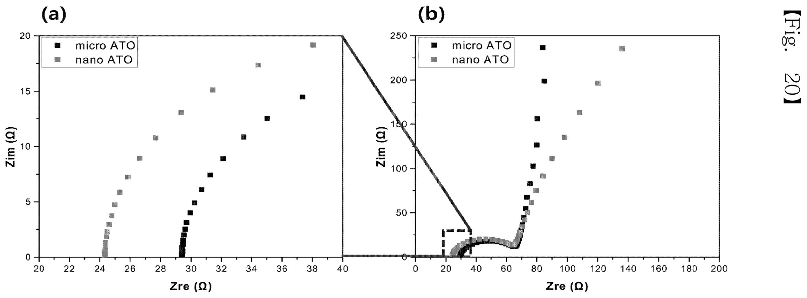

FIG. 20 is a view for explaining measurement results of electrochemical impedance of the smart mirror devices according to Experimental Examples 1 and 2 of the present invention.

FIG. 20 shows a measurement result of impedance of each of the smart mirror devices according to Experimental Example 1 (micro ATO) and Experimental Example 2 (nano ATO). Specifically, $R_s$ (sheet resistance) and $R_{ct}$ (charge transfer resistance) were measured through electrochemical impedance spectroscopy (EIS) analysis. The measured results thereof are summarized through the following <Table 2>. In addition, FIG. 20(a) shows a measurement result in a high-frequency region, and FIG. 20(b) shows a measurement result in a low-frequency region.

[Table 2]

| Classification | $R_s$ | $R_{ct}$ |
|---|---|---|
| Experimental Example 1 (Micro ATO) | 29 $\Omega$ | 38 $\Omega$ |
| Experimental Example 2 (Nano ATO) | 24 $\Omega$ | 44 $\Omega$ |

As can be seen in FIG. 20 and <Table 2>, it was confirmed that the $R_s$ value was higher for the smart mirror device according to Experimental Example 1. This is determined to be a result of an increase in specific resistance due to electron scattering generated on the rough surface. On the other hand, it was confirmed that the smart mirror device according to Experimental Example 1 had an $R_{ct}$ value lower than that of the smart mirror device according to Experimental Example 2 due to an increase in a reaction surface area because of the high surface roughness of the smart mirror device according to Experimental Example 1.

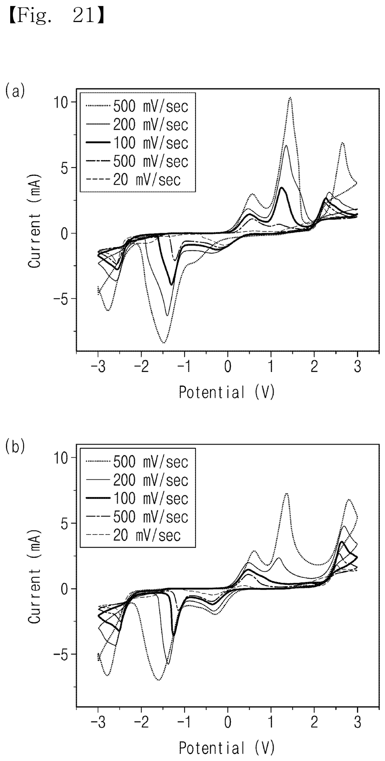

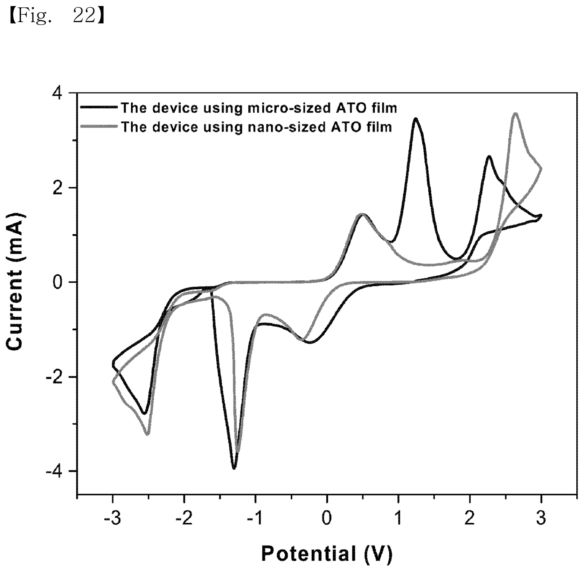

FIGS. 21 and 22 are views for explaining cyclic voltage measurement results of the smart mirror devices according to Experimental Examples 1 and 2 of the present invention.

FIGS. 21 and 22 show a measurement result of cyclic voltammetry (CV) for each of the smart mirror devices according to Experimental Examples 1 and 2. Specifically, FIG. 21(a) shows a result of the smart mirror device according to Experimental Example 1, FIG. 21(b) shows a result of the smart mirror device according to Experimental Example 2, and FIG. 22 shows a result of comparing the smart mirror devices according to Experimental Examples 1 and 2. In addition, a charge capacity (mC/cm$^2$) of each of the smart mirror devices according to Experimental Examples 1 and 2 was measured, and the measurement results thereof are summarized in <Table 3> below.

[Table 3]

| Classification | Charge capacity (mC/cm$^2$) |
|---|---|
| Experimental Example 1 | 109.87 |
| Experimental Example 2 | 95.59 |

As can be seen in <Table 3>, it was confirmed that the charge capacity of the smart mirror device according to Experimental Example 1 was higher than the charge capacity of the smart mirror device according to Experimental Example 2.

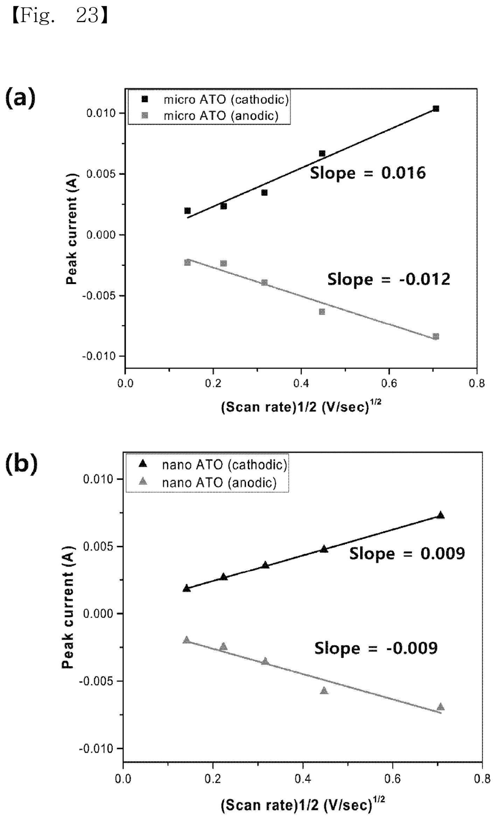

FIG. 23 is a view for explaining diffusion coefficients of the smart mirror devices according to Experimental Examples 1 and 2 of the present invention.

FIG. 23(a) shows measurement of a peak current (A) of the smart mirror device according to Experimental Example 1, and FIG. 23(b) shows measurement of a peak current (A) of the smart mirror device according to Experimental Example 2. In addition, the diffusion coefficients of the smart mirror devices according to Experimental Examples 1 and 2 are calculated through Equation 1 below, and the calculated results thereof are summarized through <Table 4> below.

<Equation 1>

$$D = \left( \frac{i_p}{2.69 \times 10^5 \times n^{\frac{3}{2}} ACV^{\frac{1}{2}}} \right)^2$$

D: Diffusion coefficient (cm$^2$/s)
$i_p$: Peak potential (A)
C: Ion concentration (mol/cm$^2$)
V: Voltage scan rate (V/s)
A: Area (cm$^2$)

[Table 4]

| Based on 200 mV/sec | Diffusion coefficient ($10^{-7}$cm$^2$/sec) | |
|---|---|---|
| | cathodic | anodic |
| Experimental Example 1 | 12.3 | 11.1 |
| Experimental Example 2 | 9.22 | 6.27 |

As can be seen in FIG. 23 and <Table 4>, it was confirmed that the smart mirror device according to Experimental Example 1 had higher electrochemical properties than those of the smart mirror device according to Experimental Example 2.

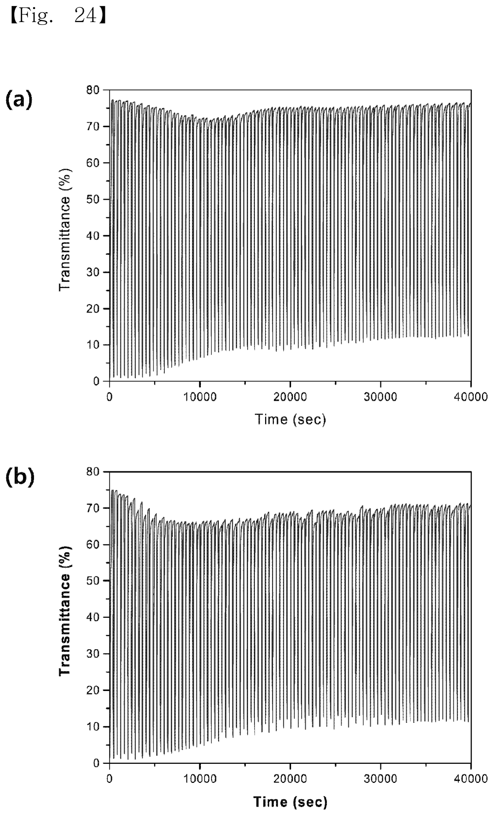

FIG. 24 is a view for explaining durability of the smart mirror devices according to Experimental Examples 1 and 2 of the present invention.

FIG. 24 shows measurement of 50 consecutive changes in discoloration/decoloration transmittance at a wavelength of 600 nm in order to confirm the durability of the smart mirror devices according to Experimental Examples 1 and 2. Specifically, in the black mode, a voltage of -3.0 V was applied for 50 seconds to discolor the smart mirror device, and a voltage of 0 V was applied for 200 seconds to decolor the smart mirror device after a voltage of +1.0 V was applied for 150 seconds. On the other hand, in the mirror mode, a voltage of +2.5 V was applied for 50 seconds to discolor the smart mirror device, and a voltage of 0 V was applied for 200 seconds to decolor the smart mirror device after a voltage of -1.0 V was applied for 150 seconds. FIG. 24(a) shows a result of the smart mirror device according to Experimental Example 1, and FIG. 24(b) shows a result of the smart mirror device according to Experimental Example 2.

As can be seen in FIG. 24(a), in the case of the smart mirror device according to Experimental Example 1, as a result of comparing the changes in transmittance ($\Delta T$) after one cycle and 50 cycles, it was confirmed that the transmittance was measured from 76% to 63%, so that performance was maintained at about 80% compared to the initial case after 50 cycles.

On the other hand, as can be seen in FIG. 24(b), in the case of the smart mirror device according to Experimental Example 2, it was confirmed that degradation occurred at the beginning of the cycle, so that the decoloration transmittance was rapidly reduced, and after 50 cycles, the performance was maintained at about 75% compared to the beginning.

That is, it can be seen that the smart mirror device according to Experimental Example 1 has excellent durability compared to the smart mirror device according to Experimental Example 2, and thus the smart mirror device according to Experimental Example 1 is suitable for long-term use.

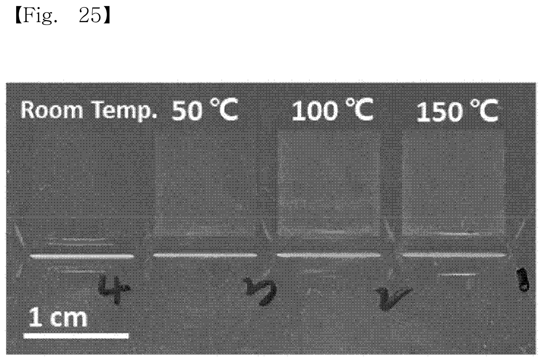

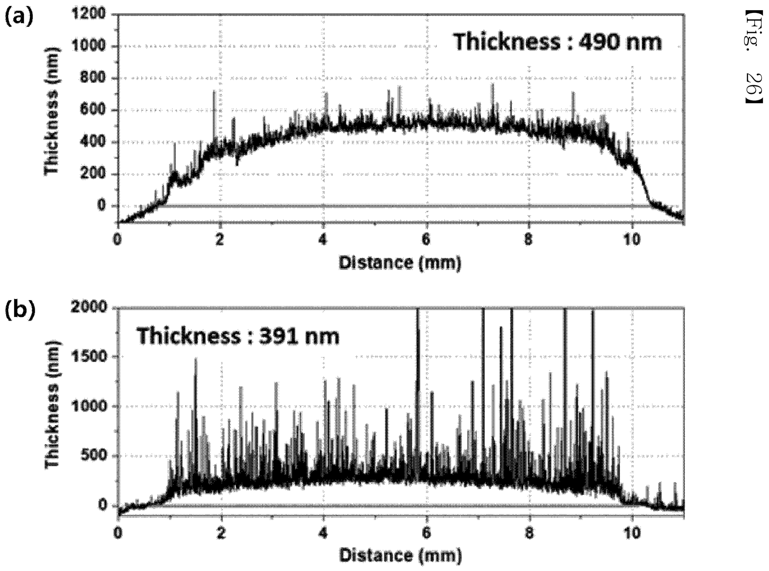

FIGS. 25 and 26 are views for explaining an effect of temperature in a process of forming an electrochromic layer of the smart mirror device according to Experimental Example 2 of the present invention.

Referring to FIG. 25, the smart mirror device according to Experimental Example 2 was prepared, while other process conditions (e.g., a nozzle scan rate of 1000 $\mu$m/sec, two times of lamination) were fixed in the process of forming the electrochromic layer, and a plurality of samples, in which the temperature was changed to room temperature (Room Temp), 50°C, 100°C, and 150°C, were prepared and photographed, respectively.

As can be seen in FIG. 25, it was confirmed that the deposition of the ATO was not properly performed on the electrochromic layer formed at a temperature of lower than 150°C (room temperature, 50°C, and 100°C).

FIG. 26(a) shows measurement of a thickness of the electrochromic layer formed at a temperature of 100°C, and FIG. 26(b) shows measurement of a thickness of the electrochromic layer formed at a temperature of 150°C.

As can be seen in FIG. 26(a), it was confirmed that the electrochromic layer formed at a temperature of 100°C had a thickness of 490 nm, whereas as can be seen in FIG. 26(b), the electrochromic layer formed at a temperature of 150°C had a thickness of 391 nm.

Accordingly, it can be seen that in order to form an electrochromic layer having a thickness of 400 nm to 500 nm, a temperature of the ATO deposition process needs to be controlled to 150°C or higher.

Although the present invention has been described in detail using the preferred embodiments, the scope of the present invention is not limited to specific embodiments and should be interpreted by the appended claims. In addition, it is to be understood that those skilled in the art may substitute, change, or modify the embodiments in various forms without departing from the scope and spirit of the present invention.

[Industrial Applicability]

The smart mirror device using a difference in surface roughness of a dry laminated thin film and the method for manufacturing the same according to the embodiment of the present invention may be applied to the smart mirror industry.

**Claims**

1. A smart mirror device comprising:

   a first electrode and a second electrode disposed opposite to each other;
   an electrochromic layer disposed between the first electrode and the second electrode and including an antimony-doped tin oxide (ATO); and
   an electrolyte disposed between the second electrode and the electrochromic layer, in which a first base electrolyte including silver (Ag), a second base electrolyte including bromine (Br), and a solvent are mixed, wherein a voltage applied to the electrochromic layer is controlled so as to control movement of silver ions ($Ag^+$) in the electrolyte, so that any one of a transparent mode for transmitting incident light, a black mode for blocking the incident light, and a mirror mode for reflecting the incident light is selectively implemented.

2. The smart mirror device of claim 1, wherein, when a negative (-) voltage is applied to the electrochromic layer, the silver ions ($Ag^+$) in the electrolyte are moved to the electrochromic layer, so that the black mode is implemented.

3. The smart mirror device of claim 1, wherein, when a positive (+) voltage is applied to the electrochromic layer, the silver ions ($Ag^+$) in the electrolyte are moved to the second electrode, so that the mirror mode is implemented.

4. The smart mirror device of claim 1, wherein, when a voltage is applied to the electrochromic layer, the silver ions ($Ag^+$) in the electrolyte are not moved, so that the transparent mode may be implemented.

5. The smart mirror device of claim 1, wherein electrochemical properties and transmittance for the incident light of the smart mirror device are selectively controlled according to the surface roughness of the electrochromic layer.

6. The smart mirror device of claim 5, wherein, when the surface roughness of the electrochromic layer has an Ra value of 85 nm or greater, the electrochemical properties of the smart mirror device is improved.

7. The smart mirror device of claim 5, wherein, when the surface roughness of the electrochromic layer has an Ra value of 20 nm or greater, the transmittance for the inclined light of the smart mirror device is improved.

8. The smart mirror device of claim 1, wherein, when any one of the black mode and the mirror mode is implemented, transmittance for incident light in a wavelength band of 300 nm to 1200 nm is 0%.

9. The smart mirror device of claim 1, wherein the electrochromic layer has a thickness of 400 nm to 500 nm.

10. A method for manufacturing a smart mirror device, the method comprising:

preparing a first electrode;
forming an electrochromic layer including an antimony-doped thin oxide (ATO) on the first electrode;
bonding the first electrode, on which the electrochromic layer is formed, with the second electrode to each other such that the electrochromic layer is disposed therebetween;
preparing an electrolyte in which a first base electrolyte including silver (Ag), a second base electrolyte including bromine (Br), and a solvent are mixed; and
injecting the electrolyte between the second electrode and the electrochromic layer.

11. The method of claim 10, wherein the electrochromic layer is formed by a dry lamination method of spraying the antimony-doped tin oxide (ATO) onto the first electrode.

12. The method of claim 11, wherein a spraying pressure of the antimony-doped tin oxide (ATO) onto the first electrode is controlled according to a size of the antimony-doped tin oxide (ATO).

13. The method of claim 12, wherein, when the antimony-doped tin oxide (ATO) has a micro ($\mu$m) size, the antimony-doped tin oxide (ATO) is sprayed at a relatively high pressure onto the first electrode, and
when the antimony-doped tin oxide (ATO) has a nano (nm) size, the antimony-doped tin oxide (ATO) is sprayed at a relatively low pressure onto the first electrode.

14. The method of claim 13, wherein, when the antimony-doped tin oxide (ATO) has a nano (nm) size, the antimony-doped tin oxide (ATO) is sprayed while heat-treating the first electrode.

【Fig. 1】

```
                    ┌─────────────┐
                    │    Start    │
                    └──────┬──────┘
                           │
                           ▼
   ┌──────────────────────────────────────────────────┐
   │              Prepare first electrode              │──── S100
   └──────────────────────┬───────────────────────────┘
                           │
                           ▼
   ┌──────────────────────────────────────────────────┐
   │  Form electrochromic layer including antimony-    │
   │  doped tin oxide (ATO) on first electrode         │──── S200
   └──────────────────────┬───────────────────────────┘
                           │
                           ▼
   ┌──────────────────────────────────────────────────┐
   │  Bond first electrode, on which electrochromic    │
   │  layer is formed, and second electrode to each    │──── S300
   │  other such that electrochromic layer is disposed │
   │  therebetween                                     │
   └──────────────────────┬───────────────────────────┘
                           │
                           ▼
   ┌──────────────────────────────────────────────────┐
   │  Prepare electrolyte in which first base          │
   │  electrolyte including silver (Ag), second base   │──── S400
   │  electrolyte including bromine (Br), and solvent  │
   │  are mixed                                        │
   └──────────────────────┬───────────────────────────┘
                           │
                           ▼
   ┌──────────────────────────────────────────────────┐
   │  Inject electrolyte between second electrode and  │──── S500
   │  electrochromic layer                             │
   └──────────────────────┬───────────────────────────┘
                           │
                           ▼
                    ┌─────────────┐
                    │     End     │
                    └─────────────┘
```

【Fig. 2】

【Fig. 3】

【Fig.   4】

Black mode (discoloration)

【Fig. 5】

Black mode (decoloration)

【Fig. 6】

Mirror mode (discoloration)

【Fig. 7】

Mirror mode (decoloration)

【Fig. 8】

(a)

(b)

(c)

【Fig. 9】

Silver = Particles of about 100 nm

ATO layer

Glass

【Fig. 10】

【Fig. 11】

【Fig. 12】

【Fig. 13】

(a)

(b)

【Fig. 14】

【Fig. 15】

【Fig. 16】

【Fig. 17】

(a)

(b)

【Fig. 18】

【Fig. 19】

【Fig. 20】

【Fig. 21】

(a)

(b)

【Fig. 22】

【Fig. 23】

**(a)**

**(b)**

【Fig. 24】

(a)

(b)

【Fig. 25】

【Fig. 26】

## INTERNATIONAL SEARCH REPORT

| International application No. |
|---|
| **PCT/KR2023/008134** |

### A. CLASSIFICATION OF SUBJECT MATTER

**G02F 1/163**(2006.01)i; **G02F 1/1523**(2019.01)i; **G02F 1/153**(2006.01)i

According to International Patent Classification (IPC) or to both national classification and IPC

### B. FIELDS SEARCHED

Minimum documentation searched (classification system followed by classification symbols)

G02F 1/163(2006.01); C09K 9/00(2006.01); G02F 1/1523(2019.01); G02F 1/153(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 안티몬이 도핑된 주석 산화물(Antimony-doped Tin Oxide, ATO), 은 (silver), 브로민(bromine), 투명(transparency), 거울(mirror)

### C. DOCUMENTS CONSIDERED TO BE RELEVANT

| Category* | Citation of document, with indication, where appropriate, of the relevant passages | Relevant to claim No. |
|---|---|---|
| X | KIM, Jiseon et al. Evaluation of a surface roughness-dependent trimodal switchable mirror using a dry deposition method. Solar Energy Materials and Solar Cells. Volume 246, Article No. 111929, 06 August 2022.<br>See pages 1-7 and figures 2-8. | 1-14 |
| A | KR 10-2022-0068867 A (INDUSTRY-UNIVERSITY COOPERATION FOUNDATION HANYANG UNIVERSITY ERICA CAMPUS) 26 May 2022 (2022-05-26)<br>See paragraphs [0039]-[0071]. | 1-14 |
| A | KR 10-2021-0094449 A (INDUSTRY-UNIVERSITY COOPERATION FOUNDATION HANYANG UNIVERSITY ERICA CAMPUS) 29 July 2021 (2021-07-29)<br>See paragraphs [0077]-[0120]. | 1-14 |
| A | US 2009-0002801 A1 (NAKAHO, Junichi et al.) 01 January 2009 (2009-01-01)<br>See claims 1-7. | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 March 2024** | **05 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 730 026 A1**

**INTERNATIONAL SEARCH REPORT**

International application No.

**PCT/KR2023/008134**

## C. DOCUMENTS CONSIDERED TO BE RELEVANT

| Category* | Citation of document, with indication, where appropriate, of the relevant passages | Relevant to claim No. |
|---|---|---|
| E | KR 10-2023-0148785 A (INDUSTRY-UNIVERSITY COOPERATION FOUNDATION HANYANG UNIVERSITY ERICA CAMPUS) 25 October 2023 (2023-10-25) See claims 1-14. | 1-14 |

Form PCT/ISA/210 (second sheet) (July 2022)

41

| INTERNATIONAL SEARCH REPORT<br>Information on patent family members | | | International application No.<br>**PCT/KR2023/008134** |
|---|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2022-0068867 | A | 26 May 2022 | US | 2023-0244116 | A1 | 03 August 2023 |
| | | | | WO | 2022-108229 | A1 | 27 May 2022 |
| KR | 10-2021-0094449 | A | 29 July 2021 | KR | 10-2550961 | B1 | 04 July 2023 |
| US | 2009-0002801 | A1 | 01 January 2009 | CN | 101334566 | A | 31 December 2008 |
| | | | | EP | 2009491 | A1 | 31 December 2008 |
| | | | | JP | 2009-008751 | A | 15 January 2009 |
| | | | | US | 7643201 | B2 | 05 January 2010 |
| KR | 10-2023-0148785 | A | 25 October 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170142473

- WO 1020160075980 A, Jeong Sun-seong